# EUROPEAN PATENT APPLICATION

(11) **EP 4 621 678 A1**
(43) Date of publication of application: **24.09.2025**
(21) Application number: 24165274.2
(22) Date of filing: 21.03.2024
(51) Int. Cl.: G06Q 10/0639, G06F 16/36, G06F 40/30, G06N 5/022

(54) **FORMALIZED DRIVE SYSTEMS INFORMATION REPRESENTATION FOR FAIR DATA AND SUPPORTED AND ENHANCED ANALYTICS DEVELOPMENT FACILITATION**

(71) Applicant: ABB SCHWEIZ AG, 5400 Baden (CH)
(72) Inventor: SCHOCH, Nicolai, 69120 Heidelberg (DE); ASHIWAL, Virendra, 68542 Heddesheim (DE); BECKER, Pascal, 76676 Graben-Neudorf (DE)
(74) Representative: Maiwald GmbH

(57) **Abstract**

There is disclosed a method for facilitation of FAIR data in a domain of a drive system, drive product and/or drive application. The method comprises providing (S110) a formal description of one or more elements and/or of one or more interrelations of the one or more elements in the domain of the drive system, drive product and/or drive application.

## Description

### FIELD OF THE INVENTION

The invention relates to formalized drive systems information representation for FAIR data and supported and enhanced analytics development facilitation.

### BACKGROUND

Today, in order to investigate on drive or drive system behaviour, usually a drive domain expert and a data analytics expert need to get together in order to conceptualize and define a new-to-be-developed analytics algorithm.

The conceptualization is not supported or only little supported. Hence, the domain expert and data scientist help each other for example in figuring out which drive sensor values or parameters to consider in the new-to-be-developed analytics application. Then, they develop the intended algorithm and test as well as evaluate the developed algorithm on a training data set or testing data set, possibly in several iterations. Thereafter, the deployment of the trained developed algorithm follows.

In this process, the domain expert's knowledge is required, for example, for bringing in that a certain first parameter and a certain second parameter are related to each other, for example proportionally related, so that these first and second parameters do not represent independent variables for analytics or a machine learning (ML) algorithm, for example. Hence, these first and second parameters should not be considered as independent variables when training the analytics models or the ML models, for example. Similarly, in this process, the data scientist's knowledge is required, for example, for bringing in that there may be an anomaly detection algorithm available in a former algorithm repository, which build on a consideration of certain drive parameters, and which was trained on sensor data from a drive of a certain type.

Hence, today, such process is highly dependent on the cooperation and joint availability of the drive domain expert and the data analytics expert. Thus, there are i.a. the drawbacks that the absence or insufficient skills of one of the drive domain expert and the data analytics entails the risk that the development of the planned algorithm will be delayed or not possible at all, or is even suboptimal or wrong, if domain expertise or mathematical constraints are unconsidered, for example. Hence, there is room for improvement.

### SUMMARY

In view of the above, it is an object of the present disclosure to overcome at least part of the drawbacks today available in the investigation on drive or drive system behaviour.

Thus, according to several examples of the present disclosure, there is described a method, apparatus, system, computer-readable storage medium, computer program product and use, which facilitates findable, accessible, interpretable and reusable (FAIR) data, in particular which enable that the knowledge of the domain expert and data scientist is FAIR, i.e. consistent with FAIR data principles.

In particular, to address one or more of the drawbacks as outlined above, there is provided, in a first aspect, a method for facilitation of FAIR data in a domain of a drive system, a drive product and/or a drive application. The method comprises providing a formal description of one or more elements and/or of one or more interrelations of the one or more elements in the domain of the drive system, the drive product and/or the drive application.

It shall be noted that the method may be a method for facilitation of FAIR data in a domain of a drive system, a drive product and/or a drive application in an industrial drive application system. The FAIR data may be FAIR data in an industrial drive application system and/or related to an industrial drive application system.

Throughout the present application, the expression "drive system, product or application", "drive system, drive product or drive application" or "drive system, drive product and/or drive application" shall be understood as "drive system and/or drive product and/or drive application", unless otherwise indicated.

Moreover, for example in order to increase understandability only, a drive product may be a motor, a drive application may be an application of such motor and a drive system may be a system which comprises such motor.

It shall be noted that the facilitation of FAIR data may be understood to provide or generate data, which are at least one of findable, accessible, interpretable and reusable. According to several examples of the present disclosure, the criterion "interpretability" may be of specific relevance.

Regarding the formal description requirement, is shall further be noted that any maturity level of formal description is meant to be comprised. Hence, anything in between a simple markup description of the elements and their interrelations and a fully-mature ontological description, comprising concepts, relations and/or classes, for example, is to be considered. In between, there may be descriptions that relate to a fixed vocabulary, or to a pre-defined taxonomy, or that are obtained from an information model or schema, up to descriptions representing a full-blown ontology to semantically describe a domain or field of interest in a computer and/or machine-readable form.

Thus, the formal description may be a formalized markup description and/or ontological representation, for example.

Further, regarding the "element" in the domain, such element may be understood to represent any "thing" or "mean" or "entity" or "information" available and/or considerable in the domain. Several detailed examples for the "element" are outlined below.

Hence, there is provided a method and/or system enabling, based on the provision of such FAIR data and/or such formal description, for speed-up, support, simplification and/or improvement of analytics and/or analytics algorithm development.

According to several examples of the present disclosure, the one or more elements may be indicative of at least one of:
- a physical quantity obtained through measurement and associated with the drive system, product or application,
- a parameter associated with the measurement,
- a tool usable in the domain,
- a repository of tools comprising the tool,
- a ML model usable in the domain,
- a repository of ML models comprising the ML model,
- a use case that has run on the drive system, product or application and historic data associated with the use case, and
- a key performance indicator, KPI, associated with the drive system, product or application.

Further, the providing may comprise providing the formal description of at least one of:
- the physical quantity,
- an interrelation of the physical quantity,
- the parameter,
- an interrelation of the parameter,
- the tool,
- an interrelation of the tool,
- the repository of tools,
- an interrelation of the repository of tools,
- the ML model,
- an interrelation of the ML model,
- the repository of ML models,
- an interrelation of the repository of ML models,
- the use case and the historic data,
- an interrelation of the use case and the historical data,
- the KPI, and
- an interrelation of the KPI.

It shall be noted that the interrelation may also comprise an interrelation among different elements, like an interrelation between a physical quantity and parameter, for example.

Hence, applicability, flexibility, reliability and/or effectivity of the method/system is further improved, since a huge variety of different elements and their interrelations may be considered.

According to several examples of the present disclosure, the providing the formal description may comprise providing a formal description of a meaning of the one or more elements and/or of a meaning of the one or more interrelations.

For example, for reasons of understandability only, a meaning of parameter "A" may be "speed" and an interrelated with a physical quantity "B" may be "meters per second". A meaning of a tool "C" interrelated with the parameter "A" may be a transformation tool for transforming a speed into an angular velocity, for example.

It shall be noted that the formal description of a meaning does not require a mature ontological description or definition, but that the formal description of a meaning can be, for example without being limited to that, a consistent markup or a fully-mature ontological formalization. Less mature formalized description manners may not necessarily have, for example without being limited to that, a clearly-defined concept, an interrelation or a triple, for example.

Hence, understandability of the elements and their interrelations as well as applicability, flexibility, reliability and/or effectivity of the method/system is further improved.

According to several examples of the present disclosure, the providing the formal description may comprise providing a representation of the one or more elements and/or the one or more interrelations as at least one of: ontological concepts, interrelations, instantiations, as a collection of triples, and as an ontological representation.

Hence, understandability of the elements and their interrelations as well as applicability, flexibility, reliability and/or effectivity of the method/system is further improved.

According to several examples of the present disclosure, the method may further comprise combining at least part of the provided formal description with usage of semantic technologies.

It shall be noted that the combining may further comprise at least part of a provided formalized markup description and/or a provided formalized ontological representation with usage of semantic technologies.

Rather, regarding the combining and with reference to the explanation as give above regarding the term formal description, this combining holds for all maturity levels of formal description or formal description methods, i.e., said in other words, from a simple markup via taxonomy and information model to an ontology.

It shall further be noted that semantic technologies may comprise at least one of querying, logic reasoners and inference.

Hence, understandability of the elements and their interrelations as well as applicability, flexibility, reliability and/or effectivity of the method/system is further improved.

According to several examples of the present disclosure, the method may further comprise obtaining information indicative of at least one of a ML model, an analytics algorithm and a tool being added as a further element to the one or more elements. The method may further comprise updating the formal description based on the obtained information. The providing the formal description may comprise providing the updated formal description.

Hence, due to the updating in view of additional and/or updated elements as well as their interrelations, reliability and actuality of the formal description is further improved.

According to several examples of the present disclosure, the method may further comprise populating the formal description by instance data. In case the formal description may comprise an ontological representation, the method may further comprise populating the ontological representation by instance data. The method may further comprise updating the formal description based on the populating. The providing the formal description may comprise providing the updated formal description.

Hence, due to the incorporation of instance data, findability and/or interpretability of the formal description is further improved.

According to several examples of the present disclosure, the method may further comprise combining an information representation setup associated with at least part of the formal description with a predetermined communication setup or protocol. The method may further comprise making an information representation setup associated with at least part of the formal description consistent with a predetermined communication setup or protocol.

Hence, applicability and usability of the method and/or of the formal description is further improved.

Moreover, there is provided, in a second aspect, a method for usage of FAIR data in a domain of a drive system, a drive product and/or a drive application. The method comprises obtaining a formal description of one or more elements and/or of one or more interrelations of the one or more elements in the domain of the drive system, the drive product and/or the drive application. The obtained formal description being the provided formal description according to the method of the first aspect. The method further comprises, based on the obtained formal description, enabling semantic reasoning and/or analytics in relation to the drive system, the drive product or the drive application.

It shall be noted that the method may be a method for usage of FAIR data in a domain of a drive system, a drive product and/or a drive application in an industrial drive application system. The FAIR data may be FAIR data in an industrial drive application system and/or related to an industrial drive application system.

It shall be noted that the usage of FAIR data may be understood to use data, which are at least one of findable, accessible, interpretable and reusable. According to several examples of the present disclosure, the criterion "interpretability" may be of specific relevance.

Further, enabling semantic reasoning also comprises enabling enhanced semantic reasoning, and enabling analytics also comprises enabling enhanced analytics. Moreover, it shall be noted that by such "enhanced", like "by enhanced analytics" it may be meant analytics with additional knowledge or insights being considered, i.e. additional, over what would be there without the FAIR setup.

Hence, there is provided a method and/or system enabling, based on the obtainment of such FAIR data and/or such formal description, for speed-up, support, simplification and/or improvement of analytics and/or analytics algorithm development.

According to several examples of the present disclosure, the enabling semantic reasoning and/or the enabling analytics may comprise at least one of:
- enabling to make use of a semantic reasoner for development of a ML algorithm for the drive system, the drive product or the drive application,
- enabling to prepare data associated with the drive system, the drive product or the drive application for analyzation purposes,
- enabling for interpretation of a feature associated with the drive system, the drive product or the drive application,
- enabling guidance, recommendations and/or improvement potential for analytics applications development for the drive system, the drive product or the drive application,
- enabling to provide a pre-selection of features and/or parameters for KPIs and/or uses cases of the drive system, the drive product or the drive application, based on querying historical setups of tools and use cases,
- enabling to integrate an analytics tool-box into the drive system, the drive product or the drive application,
- enabling support, simplification, speed-up and/or improvement of analytics algorithms and/or ML models, and
- enabling support, simplification, speed-up and/or improvement of development of analytics algorithms and/or ML models.

Hence, applicability, flexibility, reliability and/or effectivity of the method/system is further improved.

Moreover, there is provided, in a third aspect, a method for supporting a human in setting up analytics and/or a machine learning, ML, model related to a drive system, a drive product and/or a drive application. The method comprises providing, to the human, the formal description provided according to the method of the first aspect and/or obtained according to the method of the second aspect. Additionally or alternatively, the method comprises providing, to the human, the FAIR data facilitated according to the method of the first aspect and/or the FAIR data used according to the method of the second aspect.

It shall be noted that the drive system, the drive product and/or the drive application may be a drive system, a drive product and/or a drive application in an industrial drive application system.

It shall be noted that the human may represent a human expert or a responsible person.

Hence, there is provided a method and/or system comprising analytics for drives, where domain knowledge allows for speed-up, support, simplification and/or improvement of analytics and/or analytics algorithm development.

According to a fourth aspect, there is provided a control apparatus, the control apparatus being configured to carry out the above-outlined method of the first aspect and/or the second aspect and/or the third aspect.

Hence, there is provided a control apparatus enabling for analytics for drives, where domain knowledge allows for speed-up, support, simplification and/or improvement of analytics and/or analytics algorithm development.

According to a fifth aspect, there is provided a control system comprising a first control apparatus according to the fourth aspect and/or a second control apparatus according to the fourth aspect, and/or a third control apparatus according to the fourth aspect. The first control apparatus configured to carry out the method of the first aspect, the second control apparatus configured to carry out the method of the second aspect, the third control apparatus configured to carry out the method of the third aspect. The first control apparatus, the second control apparatus and the third control apparatus are directly and/or indirectly communicatively connected.

Hence, there is provided a control system enabling for analytics for drives, where domain knowledge allows for speed-up, support, simplification and/or improvement of analytics and/or analytics algorithm development.

According to a sixth aspect, there is provided an automation system comprising a first control apparatus according to the fourth aspect and/or a second control apparatus according to the fourth aspect and/or a third control apparatus according to the fourth aspect and/or the control system according to the fifth aspect. The first control apparatus configured to carry out the method of the first aspect, the second control apparatus configured to carry out the method of the second aspect, the third control apparatus configured to carry out the method of the third aspect. The first control apparatus, the second control apparatus and/or the third control apparatus are directly and/or indirectly communicatively connected.

Hence, there is provided an automation system enabling for analytics for drives, where domain knowledge allows for speed-up, support, simplification and/or improvement of analytics and/or analytics algorithm development.

According to a seventh aspect, there is provided a computer-readable medium comprising instructions which, when executed by a computing system, cause the computing system to perform the method of the first aspect and/or of the second aspect and/or the third aspect. The computer-readable medium may be transitory or non-transitory, volatile or non-volatile.

Hence, there is provided a computer-readable medium enabling for analytics for drives, where domain knowledge allows for speed-up, support, simplification and/or improvement of analytics and/or analytics algorithm development.

According to an eight aspect, there is provided a computer program product comprising instructions which, when executed by a computing system, enable or cause the computing system to perform the method of the first aspect and/or of the second aspect and/or the third aspect.

Hence, there is provided a computer program product enabling for analytics for drives, where domain knowledge allows for speed-up, support, simplification and/or improvement of analytics and/or analytics algorithm development.

According to a ninth aspect, there is provided a computing system configured to perform the method of the first aspect and/or of the second aspect and/or of the third aspect.

Hence, there is provided a computing system enabling for analytics for drives, where domain knowledge allows for speed-up, support, simplification and/or improvement of analytics and/or analytics algorithm development.

According to a tenth aspect, there is provided a use of FAIR data and/or of a formal description for supporting an operator in setting up analytics and/or a machine learning, ML, model related to a drive system, product or a drive application. The use comprises using the FAIR data facilitated according to the method of the first aspect. Additionally or alternatively, the use comprises using the formal description provided according to the method of the first aspect. Additionally or alternatively, the use comprises using the formal description obtained according to the method of the second aspect.

Hence, there is provided use enabling for analytics for drives, where domain knowledge allows for speed-up, support, simplification and/or improvement of analytics and/or analytics algorithm development.

The method of the first aspect and/or of the second aspect and/or of the third aspect may be computer implemented.

Optional features of the first aspect and/or the second aspect and/or the third aspect may form part of any of the fourth to tenth aspects, mutatis mutandis.

By "automation system", according to several examples, it may also be meant an "industrial automation system", a "drive application system" or an "industrial drive application system", which may comprise and/or be associated with a ski lift system or a ship application, for example.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates a flowchart indicative of a method according to several examples of the present disclosure;
- Figure 2 illustrates a flowchart indicative of a method according to several examples of the present disclosure; and
- Figure 3 illustrates a flowchart indicative of a method according to several examples of the present disclosure.

### DETAILED DESCRIPTION

The present disclosure describes, according to several examples of the present disclosure, a formalized drive systems information representation for findable, accessible, interpretable and reusable (FAIR) data (FAIR data principles) and enhanced analytics facilitation.

According to several examples of the present disclosure, this is to be achieved by, said in other words, having a formal description, such as a formalized markup description and/or an ontological representation, for example) of "things" and "their interrelations" in the Drive Systems Domain. That is, among other, for example:
- of drive-relevant physical quantities, like those which can be measured by sensors, for example;
- of their interrelations, like a first quantity to a second quantity, for example, or several quantities to an abstract quantity Fast-Fourier-Transformation value #1 (FFT-1);
- of tools that are used in this domain, for example an anomaly detection tool, a drive monitoring tool, an energy optimization tool, a drive calibration tool, and their respective features and/or parameters;
- additionally of a tools repository and/or models repository, like a markup-described collection of previously developed ML models, analytics algorithms, or tools for calibration, for example;
- of use cases, like anomaly detection for certain parameters and/or kex performance indicators (KPIs) of the drive, power optimization, and energy optimization, for example, along with historical data;
- and of the KPIs, like preventing drive health, maximization of drive-based system throughput and running mode classification, for example.

According to several examples of the present disclosure, this is further to be achieved by, enabling thereon-based supported Enhanced Semantic/Logic Reasoning and/or thereon-based Analytics.

Hence, according to several examples of the present disclosure, there is provided a formalized description wrapper around at least one of several elements, like physical quantities, parameters, relations, tools, models and KPIs, for example. The formalized description wrapper may consist of a markup text description and/or of an ontological representation, for example. Moreover, there is underlying knowledge about interrelations and/or dependencies among the at least one elements (i.e. among the at least one of physical quantities, parameters, relations, tools, models and KPIs), for example. Thus, human experts like a human developer, analyst, drive expert, for example, are supported. In addition, such provided Wrapper may be extremely beneficial for future artificial intelligence, Al, agent algorithms.

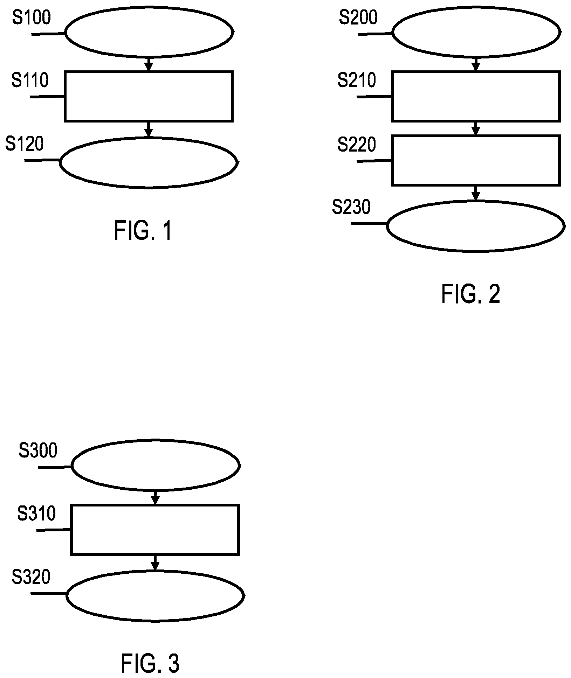

Therefore, referring now to Figure 1, Figure 1 illustrates a flowchart indicative of a method according to several examples of the present disclosure.

The method according to Figure 1 is a method for facilitation of FAIR data in a domain of a drive system, a drive product and/or a drive application according to several examples of the present disclosure.

The method starts in S100.

In S110, the method comprises providing a formal description of one or more elements and/or of one or more interrelations of the one or more elements in the domain of the drive system, the drive product and/or the drive application.

The method ends in S120.

According to several examples of the present disclosure, with reference to the above-outlined "things" and "their interrelations", which may be understood to represent the "one or more elements" and the "interrelations of the one or more elements", the one or more elements may be indicative of at least one of:
- a physical quantity obtained through measurement and associated with the drive system, the drive product or the drive application, wherein the physical quantity is measurable by a sensor, for example,
- a parameter associated with the measurement,
- a tool usable in the domain, for example an anomaly detection tool, a drive monitoring tool, an energy optimization tool, a drive calibration tool, and their respective features and/or parameters,
- a repository of tools comprising the tool,
- a ML model usable in the domain,
- a repository of ML models comprising the ML model,
- a use case that has run on the drive system, product or application and historic data associated with the use case, and
- a key performance indicator, KPI, associated with the drive system, product or application.

A tools repository and/or a ML models repository, like a markup-described collection of previously developed ML models, analytics algorithms, or tools for calibration may be considered, for example. Use cases, like anomaly detection for certain parameters and/or KPIs of the drive, power optimization, and energy optimization, for example, along with historical data may be considered, for example.

Further, the providing may comprise providing the formal description of at least one of:
- the physical quantity,
- an interrelation of the physical quantity,
- the parameter,
- an interrelation of the parameter,
- the tool,
- an interrelation of the tool,
- the repository of tools,
- an interrelation of the repository of tools,
- the ML model,
- an interrelation of the ML model,
- the repository of ML models,
- an interrelation of the repository of ML models,
- the use case and the historic data,
- an interrelation of the use case and the historical data,
- the KPI, and
- an interrelation of the KPI.

Regarding the formal description, there may be considered a formal description of sensor parameters and of physical quantities and their meanings, for example human-understandable meanings. Additionally or alternatively, there may be considered a formal description for several ML models and tools, for example all ML models and tools in the respective repositories, along with their respective functionalities, their inputs and outputs, or their KPls, and their meanings, for example human-understandable meanings. A human-understandable meaning is to be understood to represent a meaning which a human person can understand, like, for example, a name reading "drive motor application", "temperature range", "speed threshold value".

Hence, according to several examples of the present disclosure, the providing the formal description may comprise providing a formal description of a meaning of the one or more elements and/or of a meaning of the one or more interrelations.

It shall be noted that the formal description of a meaning does not require to be a mature ontological description or definition, but that the formalized description of a meaning can be, for example without being limited to that, a simple markup text description, or a description with respect to a pre-defined vocabulary or taxonomy, or an identifier mapped from an information model, or at the other end of the spectrum a fully-mature ontological representation. Less mature formalized description manners may not necessarily have, for example without being limited to that, a clearly-defined concept, an interrelation or a triple, for example.

Said in other words, regarding the formal description requirement, is shall further be noted that any maturity level of formal description is meant to be comprised. Hence, anything in between a simple markup description of the elements and their interrelations and a fully-mature ontological description, comprising concepts, relations and/or classes, for example, is to be considered. In between, there may be descriptions that relate to a fixed vocabulary, or to a pre-defined taxonomy, or that are obtained from an information model or schema, up to descriptions representing a full-blown ontology to semantically describe a domain or field of interest in a computer and/or machine-readable form.

Regarding the formal description comprising an ontological representation, an ontological representation may also be understood as a taxonomical representation, a hierarchical representation or a structured representation, there may be considered a representation of the "things" or elements in the drive systems domain and their interrelations, as ontological concepts like classes for example. The representation of the interrelations may comprise to consider an object or object properties, data or data properties, and/or an annotation or annotation properties. The representation of the interrelations may comprise to consider instantiations, like instances and/or individuals of classes, for example, with certain properties, features and/or concrete values, for example. Additionally or alternatively, the ontological representation may be provided as a collection of triples. Triples may be understood to represent a concept-to-concept representation and/or a concept-to-instance representation and/or or concept-to-value representation, for example. Among others, at least one of the following may be represented ontologically:
- that physical quantities, like speed and torque for example, are related, for example by means of a physical equation;
- that a running mode classification may depend on one or more certain physical sensor parameters, like the one or more certain physical sensor parameters' values satisfying a predetermined relationship to each other and/or the one or more certain physical sensor parameters' values each lying within a predetermined range/ranges and/or have a reached a predetermined value(s) or threshold value(s);
- that anomaly detection for a certain feature, like torque value for example, is preferably to be performed with certain measurements of certain predetermined physical sensors, like a measured steering wheel angle and/or a measured speed for example;
- that a physical quantity, like speed for example, is represented as a certain parameter, like parameter "X" for example, for a certain drive type, like drive type "D1" for example;
- that an abstract and/or compressed quantity Fast-Fourier-Transform (FFT)-Frequency-Domain (FD)/ Time-Domain (TD)-n is depending on certain raw physical quantities, like frequency range for example;
- that certain physical quantities, like a rotational speed and/or an image capturing frequency and/or a sensor read-out speed, require a minimum sensing frequency and/or a minimum required resolution, like of 1 [value x] per second, for example. Additionally or alternatively, that certain physical quantities, like a rotational speed and/or an image capturing frequency and/or a sensor read-out speed, only require for a minimum sensing frequency and/or a minimum required resolution, like of 1 [value y] per second; and
- combinations of the above and/or similar ontological representations.

Hence, according to several examples of the present disclosure, the providing the formal description may comprise providing a representation of the one or more elements and/or the one or more interrelations as at least one of: ontological concepts, interrelations, instantiations, as a collection of triples, and as an ontological representation.

Moreover, according to several examples of the present disclosure, the method may further comprise combining at least part of the provided formal description with usage of semantic technologies.

It shall be noted that semantic technologies may comprise, for example, logic reasoners for inferencing and consistency checks or querying.

It shall further be noted that with every further algorithm, for example every further ML model, analytics algorithm and/or tool, the "knowledge base" is further grown or extended. I.e., the drive systems domain knowledge representation and management system further grows or is further extended.

Thus, according to several examples of the present disclosure, the method may further comprise obtaining information indicative of at least one of a ML model, an analytics algorithm and a tool being added as a further element to the one or more elements. The method may further comprise updating the formal description based on the obtained information. The providing the formal description may comprise providing the updated formal description.

Furthermore, the formal description (for example the ontological representation) of the drive systems domain may get populated by instance data, like, for example, drive configuration parameters and/or values, historical drive data such as sensor value time series, for example, and/or labelled anomalies. Thus, an increasing knowledge graph is built up. This information model and knowledge graph facilitates FAIR data principles, and moreover thereon-based enhanced support for application and/or development of analytics algorithms and/or of ML models.

Hence, according to several examples of the present disclosure, the method may further comprise populating the formal description by instance data. The method may further comprise updating the formal description based on the populating. The providing the formal description may comprise providing the updated formal description.

It shall be noted that the approach as indicated above with reference to Figure 1 is further an enhancement in several ways. For example, by taking care of knowledge modelling and/or knowledge representation, and hence of data integration (FAIR data), for AI/ML algorithms development, by means of a guided workflow decision tree, it may be allowed to differentiate physical features and/or physical quantities into real, i.e. meaningful (meaningful in view of being understandable, comprehensible and/or meaningful for a human, for example), physical quantities and abstract features, wherein the abstract features may represent combined features and/or higher-representative features, like for example a warning message, which ich based on several individual features like speed, torque and friction, for example.

Moreover, it shall be noted that the above-outlined information representation setup can optionally be combined and made consistent with a given and/or selected communication setup or protocol. For example, the above-outlined information representation setup can possibly be combined and/or mapped to either one or more of the OPC-UA (nodes and attributes) or of the MQTT Sparkplug identifiers and information model, by means of mappings to the ontological representation of the above-described drive system parameters and/or quantities, for example. The mapping, i.e. an output of the mapping, may then be indicative of a description of how the parameters relate to and/or depend on each other, or how they influence each other, for example. Even partial mappings or partial adaptations and/or partial extractions would be considered. Like this, conversions are possible, also with any industrial communication protocols, following their information model description or syntax definition.

Hence, according to several examples of the present disclosure, the method may further comprise combining an information representation setup or protocol associated with at least part of the formal description with a predetermined communication setup or protocol. The method may further comprise making an information representation setup or protocol associated with at least part of the formal description consistent with a predetermined communication setup or protocol.

Referring now to Figure 2, Figure 2 illustrates a flowchart indicative of a method according to several examples of the present disclosure.

The method according to Figure 2 is a method for usage of FAIR data in a domain of a drive system, a drive product and/or a drive application according to several examples of the present disclosure.

The method starts in S200.

In S210, the method comprises obtaining a formal description of one or more elements and/or of one or more interrelations of the one or more elements in the domain of the drive system, the drive product and/or the drive application. The obtained formal description being the provided formal description according to the method as outlined with reference to Figure 1.

In S220, the method further comprises, based on the obtained formal description, enabling and/or performing semantic reasoning and/or analytics in relation to the drive system, the drive product or the drive application.

It shall be noted that performing semantic reasoning and/or analytics may be understood as executing semantic reasoning and/or analytics. Enabling semantic reasoning and/or analytics also comprises enabling enhanced semantic reasoning and/or enhanced analytics.

The method ends in S230.

Regarding what is enabled and/or performed, as well as regarding what use cases can be facilitated and/or what benefits can be gained, through the formal description as outlined according to the methods with reference to Figures 1 and 2, the following is to be considered according to several examples of the present disclosure.
- For example, when wanting to develop a new anomaly detection algorithm for a certain drive type, like drive type "D1" for example, to detect a certain feature, feature "X1" for example, then it can be made use of a semantic reasoner, for example of an open-source semantic reasoner, for example HermiT, to draw a logical inference and/or a logical conclusion by querying and propagating the knowledge available based on the formal description. Further, by inferring, that for this drive type, and this feature, it should be made use of a certain parameter or parameters, like of parameters "A" and "B" for example, and of a certain analytics algorithm in the respective repository, for example analytics algorithm "C", to accomplish the intention.
- For example, when wanting to analyse data, like time series data for example, for a selected physical quantity, for example physical quantity "temperature", looking up the selected physical quantity's minimum required resolution may help to compress or sparsify data or to less often request sensor values, e.g. for obtaining temperature values, from a sensor or a corresponding drive apparatus in the drive system. Furthermore, for example, knowing that a certain tool, for example called "AutoEncoder", may be used to obtain abstract lower-resolution representations of high-resolution data, for example, for illustration purposes only, an average temperature, this tool can be selected from the operator, e.g. the data scientist, to compress the data, i.e. the sensor information.
- Furthermore, for example, when wanting to understand a certain feature, for example "X", it may be looked at the feature's markup description and the feature's human-understandable meaning. For example, the feature "X" may be indicative of a heat amount occurring in a drive apparatus, wherein the heat amount results from certain processes occurring in a predetermined portion of the drive apparatus. This may be of particular interest, for example, when an analytics algorithm may find a correlation between two quantities "A" and "B", which then gets "translated" into a correlation between A=friction and B=amount of oil available, or, as another example, A=speed and B=torque. Thus, "meaningful analytics" is enabled.
- Generally, the formal description as outlined above provide guidance, recommendations and/or improvement of potential for analytics applications development. Thus, when starting, for example, a new analytics app development workflow with a large set of available variables, and wanting to do anomaly detection, for example, the formal description may be used to already suggest and/or /propose which variables are correlated or inter-/in-dependent, and hence, propose, which variables can be left away, for example, since due to correlations no more information gain is to be expected from correlated variables. Thus, it may be suggested and/or proposed which variables could be reduced, for example by using FFT, since ontology may say that torque and pressure can be combined into more meaningful FFT component for signal processing, for example. Hence, this would allow to not only do analytics with less input variables and hence less data processing efforts, but also with fewer alternative options needed to be evaluated by an ML model and/or analytics algorithm. Hence, time and/or resources may be saved but may be at least used more efficiently. This is particularly valuable for embedded analytics applications.
- Furthermore, this system, i.e. the usage of the formal description, can provide a proposed pre-selection of features and/or parameters for specific questions, KPIs, ML use cases or analytics use cases, based on querying historical setups of tools and use cases, for example.
- Furthermore, such system may be combined with an "Analytics Tool-Box / Repository". Such "Analytics Tool-Box / Repository" may be custom-built-up, internal-built-up or system-built-up. Optionally, such system may be combined with a recommendation engine: for example, with a set of pre-trained ML&DA models or with a set of pre-modelled ML&DA architectures, for different use cases and/or different applications. For example, for (typical) FFT TD/FD-values 1, 7, 14 and thereon-based anomaly detection. Additionally and/or alternatively, for example, for (typical) FFT TD/FD-values 3, 8, 11, 27 and thereon-based pattern analysis. Hence, to thus have pre-trained or pre-modelled ML&DA or ML models and/or architectures, optionally even along with best practices of splittings. Wherein splitting may be understand in that, for example, a ML model at a cloud server or at a gateway is applied on a drive application provided at/in a drive apparatus or a drive system. Additionally, the system may allow for representing in an ontological representation, which raw sensor values allow for which TD/FD value computations, and thereon-based suggest already typical, suitable, appropriate and/or well-known ML/DA algorithms.

Hence, according to several examples of the present disclosure, the enabling and/or performing semantic reasoning and/or the enabling and/or performing analytics may comprise at least one of:
- enabling making use of and/or making use of a semantic reasoner for development of a ML algorithm for the drive system, the drive product or the drive application,
- enabling preparing and/or preparing data associated with the drive system, the drive product or the drive application for analyzation purposes,
- enabling interpreting and/or interpreting of a feature associated with the drive system, the drive product or the drive application,
- enabling and/or identifying guidance, recommendations and/or improvement potential for analytics applications development for the drive system, the drive product or the drive application,
- enabling providing and/or providing a pre-selection of features and/or parameters for KPIs and/or uses cases of the drive system, the drive product or the drive application, based on querying historical setups of tools and use cases,
- enabling integrating and/or integrating an analytics tool-box into the drive system, the drive product or the drive application,
- enabling and/or identifying support, simplification, speed-up and/or improvement of analytics algorithms and/or ML models, and
- enabling and/or identifying support, simplification, speed-up and/or improvement of development of analytics algorithms and/or ML models.

Referring now to Figure 3, Figure 3 illustrates a flowchart indicative of a method according to several examples of the present disclosure.

The method according to Figure 3 is a method for supporting a human in setting up analytics and/or a machine learning, ML, model related to a drive system, a drive product and/or a drive application.

The method starts in S300.

In S310, the method comprises providing, to the human, the formal description provided according to the method as outlined above with reference to Figure 1 and/or obtained according to the method as outlined above with reference to Figure 2. Additionally or alternatively, the method comprises providing, to the human, the FAIR data facilitated according to the method as outlined above with reference to Figure 1 and/or the FAIR data used according to the method as outlined above with reference to Figure 2.

The method ends in S320.

Hence, there is provided a method and/or system comprising analytics for drives, where domain knowledge allows for speed-up, support, simplification and/or improvement of analytics and/or analytics algorithm development.

Moreover, according to several examples of the present disclosure, the method according to Figure 3 may further comprise that the human performs such semantic reasoning and/or analytics as enabled by the method as outlined above with reference to Figure 2.

According to several examples of the present disclosure, there is provided a control apparatus for a drive application, the control apparatus being configured to carry out the above-outlined method, methods and/or individual method steps as outlined with reference to any of Figures 1 to 3.

In more detail, according to various examples, a control apparatus for a drive application is disclosed, wherein the control apparatus is configured to carry out at least one of the methods as outlined above with reference to Figures 1 to 3. For instance, the control apparatus may comprise a processor and a memory for storing instructions, which, when executed by the processor, may cause the control apparatus to e.g. execute the method steps as outlined above with reference to Figures 1 to 3. For such execution, the control apparatus may comprise several functional portions, e.g. a providing portion to carry out a process according to Step S110 of Figure 1. Additionally and/or alternatively, the control apparatus may comprise several functional portions, e.g. an obtaining portion to carry out a process according to Step S210 of Figure 2, and an enabling and/or performing portion to carry out a process according to Step S220 of Figure 2. Additionally and/or alternatively, the control apparatus may comprise several functional portions, e.g. a providing portion to carry out a process according to Step S310 of Figure 3.

Hence, the control apparatus may participate in enabling for analytics for drives, where domain knowledge allows for speed-up, support, simplification and/or improvement of analytics and/or analytics algorithm development.

Moreover, according to several examples of the present disclosure, there is provided a control system comprising a first control apparatus as outlined above and/or a second control apparatus as outlined above and/or a third control apparatus as outlined above. The first control apparatus configured to carry out the method as outlined with reference to Figure 1, the second control apparatus configured to carry out the method as outlined with reference to Figure 2, the third control apparatus configured to carry out the method as outlined with reference to Figure 3. The first control apparatus, the second control apparatus and the third control apparatus are directly and/or indirectly communicatively connected.

Hence, the control system may participate in enabling for analytics for drives, where domain knowledge allows for speed-up, support, simplification and/or improvement of analytics and/or analytics algorithm development.

Moreover, according to several examples of the present disclosure, there is provided an (industrial) automation system (or (industrial) drive application system) comprising a first control apparatus as outlined above and/or a second control apparatus as outlined above and/or a third control apparatus as outlined above and/or the control system as outlined above. The first control apparatus configured to carry out the method as outlined with reference to Figure 1, the second control apparatus configured to carry out the method as outlined with reference to Figure 2, the third control apparatus configured to carry out the method as outlined with reference to Figure 3. The first control apparatus, the second control apparatus, the third control apparatus and the control system are directly and/or indirectly communicatively connected.

Hence, the automation system may participate in enabling for analytics for drives, where domain knowledge allows for speed-up, support, simplification and/or improvement of analytics and/or analytics algorithm development.

Moreover, according to several examples of the present disclosure, there is provided a computer-readable medium comprising instructions which, when executed by a computing system, cause the computing system to perform the method and/or methods as outlined above with reference to any of Figure 1, Figure 2 and Figure 3. The computer-readable medium may be transitory or non-transitory, volatile or non-volatile.

Hence, the computer-readable medium may participate in enabling for analytics for drives, where domain knowledge allows for speed-up, support, simplification and/or improvement of analytics and/or analytics algorithm development.

Moreover, according to several examples of the present disclosure, there is provided a computer program product comprising instructions which, when executed by a computing system, cause the computing system to perform the method and/or methods as outlined above with reference to any of Figure 1, Figure 2 and Figure 3.

Hence, the computer program product may participate in enabling for analytics for drives, where domain knowledge allows for speed-up, support, simplification and/or improvement of analytics and/or analytics algorithm development.

Moreover, according to several examples of the present disclosure, there is provided a computing system configured to perform the method and/or methods as outlined above with reference to any of Figure 1, Figure 2 and Figure 3.

Hence, the computing system may participate in enabling for analytics for drives, where domain knowledge allows for speed-up, support, simplification and/or improvement of analytics and/or analytics algorithm development.

The method and/or methods as outlined above with reference to any of Figure 1, Figure 2 and Figure 3 may be computer implemented.

Moreover, according to several examples of the present disclosure, there is provided a use of FAIR data and/or of a formal description for supporting a human in setting up analytics and/or a machine learning, ML, model related to a drive system, product or application. The use comprises using the FAIR data facilitated according to the method as outlined above with reference to Figure 1. Additionally or alternatively, the use comprises using the formal description provided according to the method as outlined above with reference to Figure 1. Additionally or alternatively, the use comprises using the formal description obtained according to the method as outlined above with reference to Figure 2.

Optional features of the method and/or methods according to any of the Figures 1 to 3 may form part of any of the control apparatus, the control system, the automation system, the computer-readable medium, the computer program product, the computing system and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

### Reference signs:

S100 to S120: method steps
S200 to S230: method steps
S300 to S320: method steps

## Claims

1. A method for facilitation of FAIR data in a domain of a drive system, drive product and/or drive application, the method comprising:
providing (S110) a formal description of one or more elements and/or of one or more interrelations of the one or more elements in the domain of the drive system, drive product and/or drive application.

2. The method according to claim 1, wherein the one or more elements are indicative of at least one of:
a physical quantity obtained through measurement and associated with the drive system, drive product and/or drive application,
a parameter associated with the measurement,
a tool usable in the domain,
a repository of tools comprising the tool,
a ML model usable in the domain,
a repository of machine learning, ML, models comprising the ML model,
a use case that has run on the drive system, drive product and/or drive application and historic data associated with the use case, and
a key performance indicator, KPI, associated with the drive system, drive product and/or drive application; and
wherein the providing comprises providing the formal description of at least one of:
the physical quantity,
an interrelation of the physical quantity,
the parameter,
an interrelation of the parameter,
the tool,
an interrelation of the tool,
the repository of tools,
an interrelation of the repository of tools,
the ML model,
an interrelation of the ML model,
the repository of ML models,
an interrelation of the repository of ML models,
the use case and the historic data,
an interrelation of the use case and the historical data,
the KPI, and
an interrelation of the KPI.

3. The method according to claim 1 or 2, wherein the providing the formal description comprises providing a formal description of a meaning of the one or more elements and/or of a meaning of the one or more interrelations.

4. The method according to any of claims 1 to 3, wherein the providing the formal description comprises providing a representation of the one or more elements and/or the one or more interrelations as at least one of: ontological concepts, interrelations, instantiations, as a collection of triples, and as an ontological representation.

5. The method according to any of claims 1 to 4, further comprising: combining at least part of the provided formal description with usage of semantic technologies.

6. The method according to any of claims 1 to 5, further comprising:
obtaining information indicative of at least one of a ML model, an analytics algorithm and a tool being added as a further element to the one or more elements; and
updating the formal description based on the obtained information,
wherein the providing the formal description comprises providing the updated formal description.

7. The method according to any of claims 1 to 6, further comprising:
populating the ontological representation by instance data; and
updating the formal description based on the populating,
wherein the providing the formal description comprises providing the updated formal description.

8. The method according to any of claims 1 to 7, further comprising:
combining an information representation setup associated with at least part of the formal description with a predetermined communication setup or protocol; and/or
making an information representation setup associated with at least part of the formal description consistent with a predetermined communication setup or protocol.

9. A method for usage of FAIR data in a domain of a drive system, drive product and/or drive application, the method comprising:
obtaining (S210) a formal description of one or more elements and/or of one or more interrelations of the one or more elements in the domain of the drive system, drive product and/or drive application, the obtained formal description being the provided formal description according to any of claims 1 to 8; and
based on the obtained formal description, enabling and/or performing (S220) semantic reasoning and/or analytics in relation to the drive system, drive product and/or drive application.

10. The method according to claim 9, wherein the enabling and/or performing semantic reasoning and/or analytics comprises at least one of:
making use of a semantic reasoner for development of a ML algorithm for the drive system, drive product and/or drive application,
preparing data associated with the drive system, drive product and/or drive application for analyzation purposes,
interpreting of a feature associated with the drive system, drive product and/or drive application,
enabling and/or identifying guidance, recommendations and/or improvement potential for analytics applications development for the drive system, drive product and/or drive application,
providing a pre-selection of features and/or parameters for KPIs and/or uses cases of the drive system, drive product and/or drive application, based on querying historical setups of tools and use cases,
integrating an analytics tool-box into the drive system, drive product and/or drive application,
enabling and/or identifying support, simplification, speed-up and/or improvement of analytics algorithms and/or ML models, and
enabling and/or identifying support, simplification, speed-up and/or improvement of development of analytics algorithms and/or ML models.

11. A method for supporting a human in setting up analytics and/or a machine learning, ML, model related to a drive system, drive product and/or drive application, the method comprising:
providing (S310), to the human, the formal description provided according to any of claims 1 to 8 and/or obtained according to claim 9 or 10; and/or
providing (S310), to the human, the FAIR data facilitated according to any of claims 1 to 8 and/or the FAIR data used according to claim 9 or 10.

12. A control apparatus for facilitating and/or using FAIR data in a domain of a drive system, drive product and/or drive application, and/or for supporting a human in setting up analytics and/or a machine learning, ML, model related to a drive system, drive product and/or drive application, the apparatus being configured to carry out the method of any of claims 1 to 8 and/or of claims 9 or 10 and/or of claim 11.

13. An automation system comprising a first control apparatus according to claim 12 and/or a second control apparatus according to claim 12 and/or a third control apparatus according to claim 12, the first control apparatus configured to carry out the method of any of claims 1 to 8, the second control apparatus configured to carry out the method of claims 9 or 10, the third control apparatus configured to carry out the method of claim 11, and wherein the first control apparatus, the second control apparatus and/or the third control apparatus are directly and/or indirectly communicatively connected.

14. A computer-readable medium comprising instructions which, when executed by a computing system, cause the computing system to perform the method of any of claims 1 to 8 and/or of claims 9 or 10 and/or of claim 11.

15. A computer program product comprising instructions which, when executed by a computing system, enable or cause the computing system to perform the method of any of claims 1 to 8 and/or of claims 9 or 10 and/or of claim 11.

16. Use of FAIR data and/or of a formal description for supporting a human in setting up analytics and/or a machine learning, ML, model related to a drive system, drive product and/or drive application, the use comprising:
using the FAIR data facilitated according to any of claims 1 to 8 and/or
using the formal description provided according to any of claims 1 to 8 and/or
using the formal description obtained according to claim 9 or 10.
